# EUROPÄISCHE PATENTSCHRIFT

(11) **EP 1 316 737 B1**
(45) Veröffentlichungstag und Bekanntmachung des Hinweises auf die Patenterteilung: **11.01.2006**
(21) Anmeldenummer: 02024347.3
(22) Anmeldetag: 02.11.2002
(51) Int. Cl.: F16C 35/063, F16B 39/02, F16D 1/08

(54) **Klemmring**
Clamp ring
Anneau de serrage

(30) Priorität: 01.12.2001 DE 10159143
(43) Veröffentlichungstag der Anmeldung: 04.06.2003
(73) Patentinhaber: INA-Schaeffler KG, 91074 Herzogenaurach (DE)
(72) Erfinder: Hestermann, Jörg-Oliver, 91074 Herzogenaurach (DE)

(56) Entgegenhaltungen:
- US-A- 3 081 099
- US-A- 3 127 202
- US-A- 3 281 170
- US-A- 5 851 084

## Beschreibung

### Anwendungsgebiet der Erfindung

Die Erfindung betrifft einen gegen unbeabsichtigtes Verschieben gesicherten Klemmring zum axialen Positionieren eines auf einer Welle angeordneten, um seine Längsachse drehbaren Teils, wobei der Klemmring mit seiner inneren Mantelfläche auf die Mantelfläche der Welle aufgeschoben und mit einem Teil seiner inneren Mantelfläche über ein Stellglied gegen die Mantelfläche der Welle elastisch radial verspannbar ist.

### Hintergrund der Erfindung

Ein derartiger Klemmring ist aus dem GB 21 77 178 A vorbekannt. Dieser als Klemmmutter ausgebildete Klemmring weist an einer seiner Stirnseiten eine umlaufende Nut begrenzter axialer Erstreckung auf. Diese Nut ist mehr zum Innenumfang der Klemmmutter hin gelegen, so dass sie eine radial äußere Wand größerer Dicke und eine radial innere Wand geringerer Dicke begrenzt. In die äußere Wand sind mehrere über den Umfang verteilt angeordnete Gewindebohrungen eingeschnitten, in die Schrauben eingreifen, die mit ihrem freien Ende in die Nut hineinragen und die radial innere Wand mit einer Kraft beaufschlagen. In Folge dieser Druckbelastung wird die innere Wand elastisch radial nach innen ausgelenkt, so dass diese innere Wand auf der Gewindewelle festgeklemmt werden kann.

Nachteilig dabei ist, dass bei dieser Klemmmutter die Funktionen Verspannen, dass heißt Fixieren des Teils auf der Welle, und Klemmen, dass heißt ein unbeabsichtigtes Lösen der Klemmmutter, nicht getrennt sind. Nach dem Aufschrauben der Klemmmutter auf das Gewinde der Welle wird diese anschließend durch Eindrehen der Feststellschrauben auf der Welle fixiert. Es besteht nun die Gefahr, dass die Klemmwirkung nachläßt, weil die radial äußere Wand, die die Feststellschrauben trägt, sich aufweiten kann. Dieses Aufweiten wiederum wirkt sich negativ auf die Vorspannung eines festzulegenden Teils, beispielsweise eines Lagerringes, aus. Die äußere Wand größerer Dicke wird durch das radiale Aufweiten auch in axialer Richtung ausgelenkt und beeinflußt so die axiale Kraftbeaufschlagung des festzulegenden Teils.

In diesem Zusammenhang ist fur die Abdichtung eines Ringspaltes aus der US 3,081,099 eine Klemmverbindung bekannt geworden, bei dem ein eine Dichtung tragender Klemmring auf eine Welle aufgeschoben ist. Dieser besteht aus einem Stützkörper und einem Klemmkörper, die durch einen radialen Spalt voneinander getrennt sind. Der klemmkörper weist einen axialen Schlitz auf, der parallel zur Längsachse verläuft und über eine Stellschraube in Umfangsrichtung veränderbar ist. Nachteilig dabei ist, dass Stützkörper und klemmkörper nur unter Schwierigkeiten genan auf der Welle in axialer Richtung positioniert werden können, was für die Qualität der Dichtung aber von ausschlaggeben der Bedeutung ist.

### Zusammenfassung der Erfindung

Aufgabe der vorliegenden Erfindung ist es daher, einen Klemmring nach den Merkmalen des Oberbegriffes so auszubilden, dass er nach dem Anziehen das auf der Welle festzulegende Teil beim Verklemmen nicht mit einer zusätzlichen Kraft beaufschlagt.

Erfindungsgemäß wird diese Aufgabe nach dem kennzeichnenden Teil von Anspruch 1 dadurch gelöst, dass der Klemmring
als eine Klemmmutter ausgebildet ist, die ein Innengewinde aufweist, das in ein Außengewinde der Welle eingreift, wobei sich das Innengewinde des Klemmkörpers, vom Außengewinde der Welle unterscheidet und dass die Klemmutter
einen quer zur Längsachse verlaufenden ersten radialen Schlitz aufweist, so dass ein in axialer Richtung hintereinander liegender Stützkörper und ein Klemmkörper gebildet sind, wobei der Klemmkörper an wenigstens einer Umfangsstelle einen durchgehenden parallel zur Längsachse verlaufenden zweiten axialen Schlitz aufweist, der Ober das Stellglied in seiner Breite in Umfangsrichtung veränderbar ist.

Durch diese erfindungsgemäße Ausbildung des Klemmringes werden seine beiden Funktionen, nämlich einerseits dass das axiale Verspannen des auf der Welle festzulegenden Teils und andererseits das eigentliche Verklemmen, voneinander getrennt, so dass es sich nicht gegenseitig in negativer Weise beeinflussen können. Zunächst wird der Klemmring auf die Welle aufgeschoben und dabei mit einer axialen Kraft beaufschlagt, die für die Festlegung des auf der Welle angeordneten Teils gewünscht ist. Unter Beibehaltung dieser axialen Kraft wird danach durch Eindrehen der Stellschrauben in den Klemmkörper dessen axialer Schlitz in Umfangsrichtung verringert, so dass der Klemmkörper und damit der gesamte Klemmring auf der Welle elastisch radial verspannt ist. Dass heißt, der gesamte Klemmring ist auf der Welle verdrehgesichert befestigt. Dabei ist von Vorteil, dass im Gegensatz zum bisherigen Stand der Technik die Durchmesserverringerung des Klemmkörpers durch dessen direktes Zusammenpressen realisiert ist. Ein Aufweiten und damit ein axiales Verschieben des Klemmringes, das wiederum das auf der Welle festgelegte Teil hinsichtlich seiner Vorspannung beeinflußt, ist somit verhindert.

Die Ausbildung des klemmringes als Stellmutter erlaubt eine besonders einfache und schnehe Fixierung auf der Welle. Durch die unterschiedliche Ausbildung von Innengewinde des klemmkörpers und Außengewinde der Welle ist sichergestellt, dass beim Klemmvorgang das Wellen gewinde nicht beschädigt wird.

Vorteilhafte Ausgestaltungen der Erfindung sind in den Unteransprüchen beschrieben.

So ist nach Anspruch 2 vorgesehen, dass der erste radiale Schlitz in Umfangsrichtung gesehen eine maximale Ausdehnung von 355° aufweisen soll. Je größer die Ausdehnung des radialen Schlitzes in Umfangsrichtung ist, um so besser werden die beiden Funktionen des Klemmringes, nämlich das Fixieren und das eigentliche Festklemmen auf der Welle, entkoppelt. Es ist jedoch zu beachten, dass immer eine genügend stabile Verbindung zwischen Stützkörper und Klemmkörper des Klemmringes gegeben ist.

Nach Anspruch 3 soll der Klemmkörper zwei axiale Schlitze aufweisen, so dass ein getrennter Klemmbügel gebildet ist, der über zwei Stellschrauben mit einem mit dem Stützkörper verbundenen Klemmkörperteil verbindbar ist.

Eine andere Ausgestaltung der Erfindung nach Anspruch 4 sieht vor, dass der Klemmkörper zwei axiale Schlitze aufweist, so dass ein Klemmkörperteil und ein Klemmbügel gebildet sind, die beide über je einen Steg mit dem Stützkörper verbunden sind.

Aus Anspruch 5 geht hervor, dass die Mantelfläche des Stütz- und/oder Klemmkörpers mit Freistellungen versehen sein sollen. Diese Freistellungen sind in der Regel als Nuten ausgebildet, die für den Eingriff eines Betätigungswerkzeuges vorgesehen sind, so dass das Positionieren des Klemmringes auf der Welle in einfacher Weise erfolgen kann.

Die Erfindung wird an nachstehenden Ausführungsbeispielen näher erläutert.

### Kurze Beschreibung der Zeichnungen

Es zeigen:
- Figuren 1, 4, 7 und 10: eine perspektivische Darstellung eines erfindungsgemäßen Klemmringes,
- Figuren 2, 5 und 8: eine Draufsicht auf den Klemmring entsprechend den Figuren 1, 4 und 7 und
- Figuren 3, 6 und 9: einen Querschnitt durch den Klemmring im Bereich der Stellschrauben entsprechend den Figuren 2, 5 und 8.

### Ausführliche Beschreibung der Zeichnungen

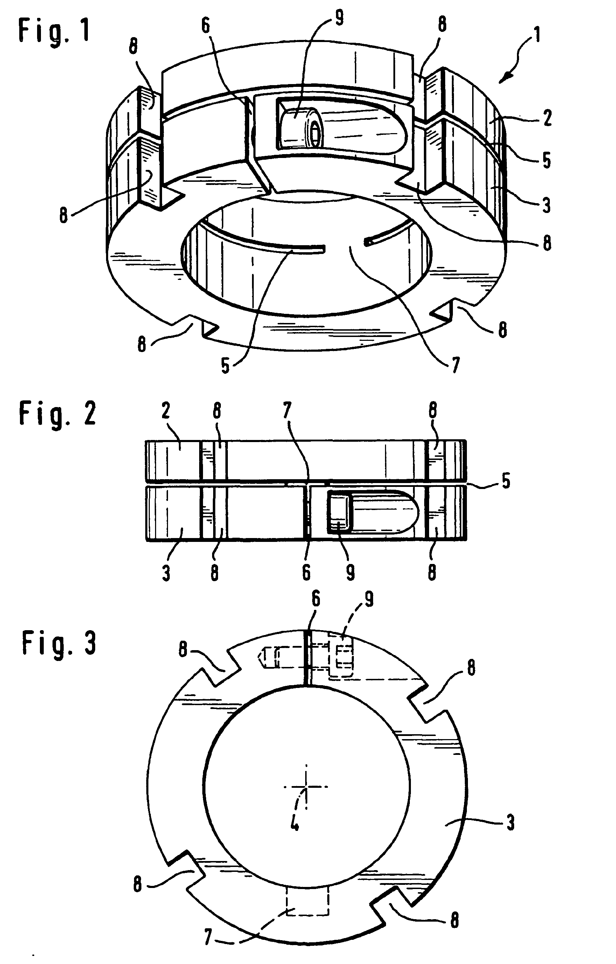

Der in den Figuren 1, 2 und 3 gezeigte Klemmring 1 besteht aus dem Stützkörper 2 und dem Klemmkörper 3, die in Richtung der Längsachse 4 hintereinander angeordnet und durch den ersten radialen Schlitz 5 voneinander getrennt sind. Der Schlitz 5 weist in Umfangsrichtung gesehen eine sehr große Ausdehnung auf, dass heißt Stützkörper 2 und Klemmkörper 3 sind lediglich durch den Steg 7 miteinander verbunden. Dieser Steg 7 ist, wie insbesondere Figur 3 deutlich macht, nur über einen Teil der radialen Stärke von Stützkörper 2 bzw. Klemmkörper 3 im Anschluß an deren inneren Mantelflächen ausgebildet. Sowohl Stützkörper 2 als auch Klemmkörper 3 sind an ihren Mantelflächen mit in axialer Richtung verlaufenden Freistellungen 8 in Form von durchgehenden Nuten versehen, die für den Eingriff eines Werkzeuges, beispielsweise eines Hakenschlüssels, bestimmt sind.

Wie die genannten Figuren weiter zeigen, ist der Klemmkörper 3 an einer Umfangsstelle mit dem durchgehenden zweiten axialen Schlitz 6 versehen, der in seiner Breite in Umfangsrichtung durch die Stellschraube 9 mit dem Innensechskant veränderbar ist Während der Schaft der Stellschraube 9 im Klemmkörper 3 linksseitig des Schlitzes 6 angeordnet ist, ist deren Kopf rechtsseitig des Schlitzes 6 in einer nicht bezeichneten Ausnehmung des Klemmkörpers 3 angeordnet. Wird diese mit einem Außengewinde versehene Schraube 9 in den Klemmkörper 3 hineingeschraubt, so wird der Durchmesser des Klemmkörpers 3 verringert, dass heißt, dieser wird auf einer nicht gezeigten Welle radial elastisch verspannt, so dass eine hohe Reibkraft gegeben ist, die dem Lösen des Klemmringes 1 entgegenwirkt. Beim Drehen der Schraube 9 in umgekehrter Richtung wird der Klemmkörper 3 wieder auffedem, so dass der gesamte Klemmring 1 von der nicht gezeigten Welle abgezogen werden kann.

Der aus den Bauteilen Stützkörper 2 und Klemmkörper 3 bestehende Klemmring 1 wird zunächst mit seiner inneren Mantelfläche auf eine Mantelfläche der nicht gezeigten Welle aufgeschoben. Der Stützkörper 2 gelangt mit seiner Stirnfläche an eine Stimfläche eines auf die Welle angeordneten Bauteiles zur Anlage, beispielsweise an die Stirnseite eines Innenringes eines Wälzlagers. Dabei wird auf den Klemmring 1 eine axiale Kraft aufgebracht, die der gewünschten Vorspannung des Lagers entspricht. Unter Beibehaltung dieser axialen Vorspannung wird durch Eindrehen der Stellschraube 9 mit Hilfe eines Steckschlüssels der Klemmkörper 3 elastisch radial auf der Welle verspannt. Dadurch, dass die Verbindung von Stützkörper 2 und Klemmkörper 3 nur über den Steg 7 realisiert ist, wird eine hohe Planlaufgenauigkeit des Stützkörpers 2 und damit des auf der Welle festgelegten Lagers insgesamt realisiert.

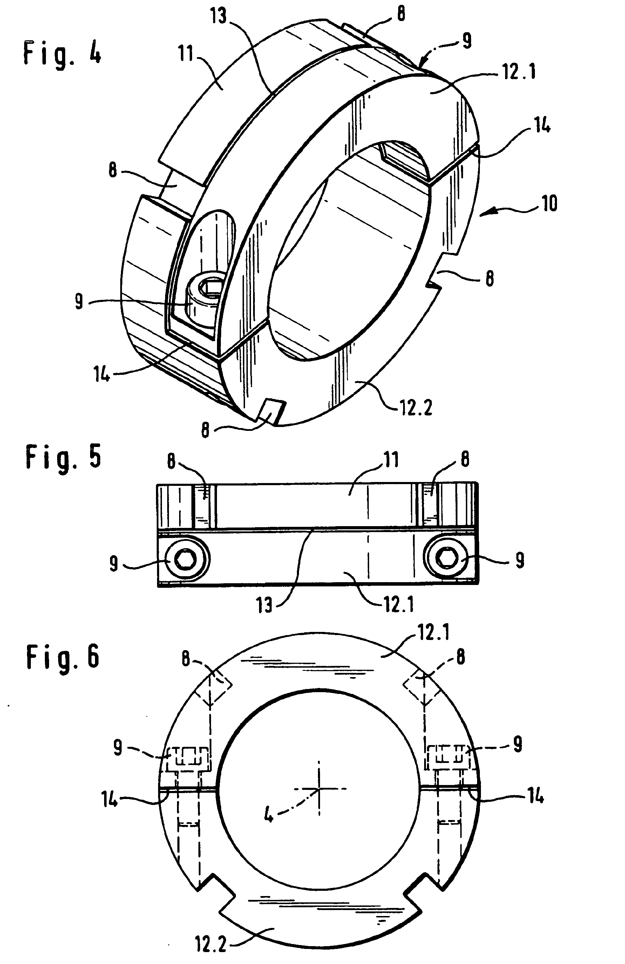

Der in den Figuren 4, 5 und 6 gezeigte Klemmring 10 besteht aus dem mit Freistellungen versehenen Stützkörper 11 und dem Klemmkörperteil 12.2, der einstückig mit dem Stützkörper 11 verbunden ist Der Klemmkörper 12 ist demnach zweiteilig ausgebildet und besteht aus dem Klemmkörperteil 12.2 und dem Klemmbügel 12.1, der vom Stützkörper 11 durch den ersten radialen Schlitz 13 beabstandet ist. Wie erkennbar, erstreckt sich dieser Schlitz 13 in Umfangsrichtung gesehen um 180°. Der Klemmkörper 12 ist mit zwei gegenübertiegenden zweiten axialen durchgehenden Schlitzen 14 versehen, so dass der Klemmbügel 12.1 gebildet ist, der wiederum mittels zweier Stellschrauben 9 am Klemmkörperteil 12.2 befestigt wird. In diesem Fall ist es aus Gründen eines verbesserten Rundlaufes zweckmäßig, die Stellschrauben 9 abweichend von der zeichnerischen Darstellung an jeder Seite unterschiedlich einzuführen, dass heißt, einmal mit dem Schraubenkopf radial von oben und einmal radial von unten.

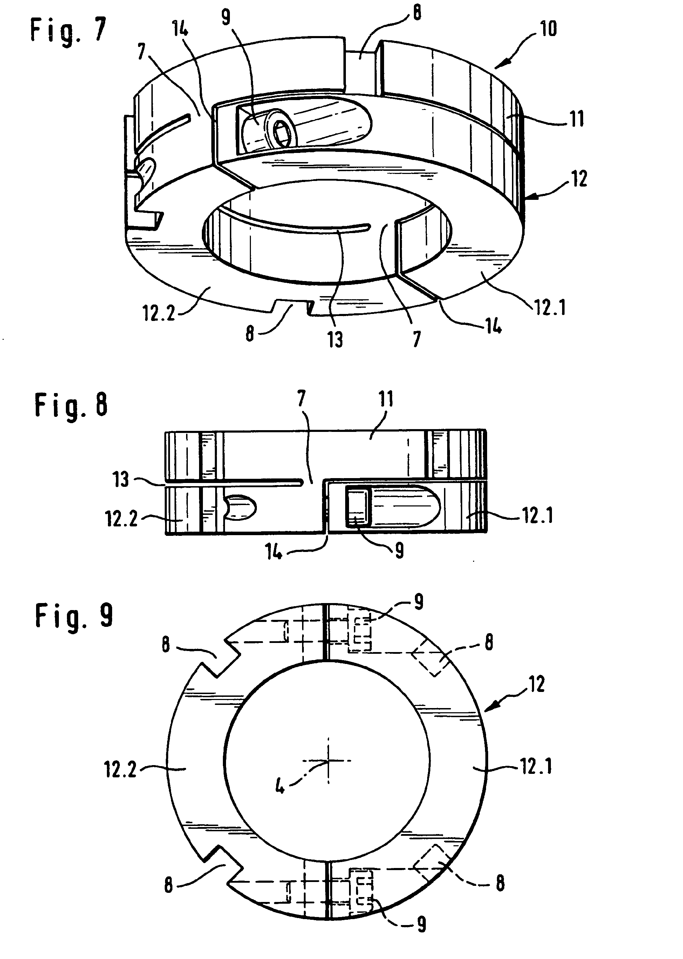

Der in den Figuren 7, 8 und 9 dargestellte Klemmring 10 unterscheidet sich von dem gemäß den Figuren 4 bis 6 dadurch, dass sich der erste radiale Schlitz 13 bis nahezu über die gesamte Umfangsausdehnung erstreckt. Dies bedeutet, der Klemmkörperteil 12.2 ist mit dem Stützkörper 11 durch die beiden in Umfangsrichtung gegenüberliegenden Stege 7 verbunden.

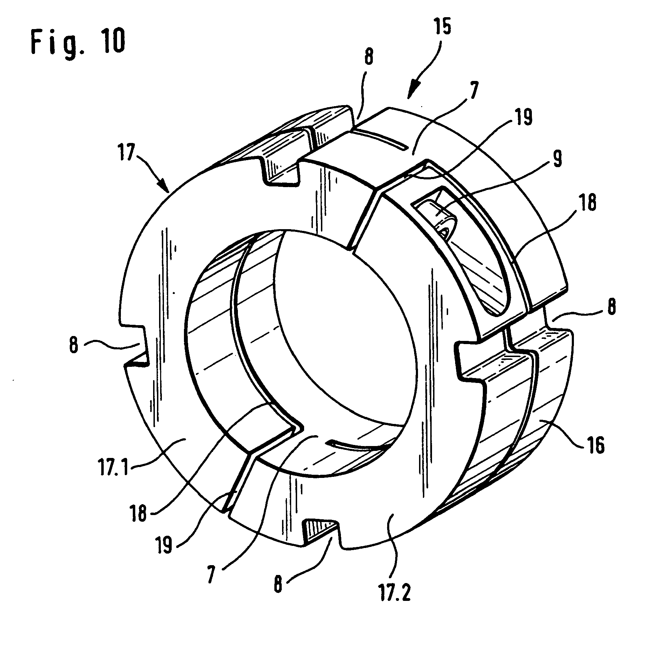

Der in Figur 10 gezeigte Klemmring 15 besteht aus dem Stützkörper 16 und dem Klemmkörper 17, die durch den ersten radialen Schlitz 18 voneinander getrennt sind. Der Klemmkörper 17 weist zwei zweite gegenüberliegende axiale Schlitze 19 auf, so dass ein Klemmkörperteil 17.1 und ein Klemmbügel 17.2 gebildet sind, die beide durch je einen Steg 7 mit dem Stützkörper 16 verbunden sind. Dabei sind im Prinzip die Umfangsausdehnung, die radiale Stärke und die Lage beider Stege 7 zueinander frei variierbar. Im Klemmkörperteil 17.1 ist die Stellschraube 9 aufgenommen, die durch eine nicht bezeichnete Durchgangsbohrung im Klemmbügel 17.2 hindurchgeführt ist. Die Klemmwirkung wird derart erzielt, dass durch Eindrehen der Stellschraube 9 in den Klemmkörperteil 17.1 der zugehörige axiale Schlitz in seiner Umfangsausdehnung verkleinert wird.

### Bezugszeichen

- 1: Klemmring
- 2: Stützkörper
- 3: Klemmkörper
- 4: Längsachse
- 5: erster radialer Schlitz
- 6: zweiter axialer Schlitz
- 7: Steg
- 8: Freistellung
- 9: Stellschraube
- 10: Klemmring
- 11: Stützkörper
- 12: Klemmkörper
- 12.1: Klemmbügel
- 12.2: Klemmkörperteil
- 13: erster radialer Schlitz
- 14: zweiter axialer Schlitz
- 15: Klemmring
- 16: Stützkörper
- 17: Klemmkörper
- 17.1: Klemmkörperteil
- 17.2: Klemmbügel
- 18: erster radialer Schlitz
- 19: zweiter axialer Schlitz

## Patentansprüche

1. Gegen unbeabsichtigtes Verschieben gesicherter Klemmring (1,10, 15) zum axialen Positionieren eines auf einer Welle angeordneten, um seine Längsachse (4) drehbaren Teils, wobei der Klemmring (1,10, 15) mit seiner inneren Mantelfläche auf die Mantelfläche der Welle aufgeschoben und mit einem Teil seiner inneren Mantelfläche über ein Stellglied (9) gegen die Mantelfläche der Welle elastisch radial verspannbar ist, **dadurch gekennzeichnet, dass** der Klemmring (1,10, 15)
als eine Klemmmutter ausgebildet ist, die ein Innengewinde aufweist, das in ein Außengewinde der Welle eingreift, wobei sich das Innengewinde des Klemmkörpers (3, 12, 17) vom Außengewinde der Welle unterscheidet und dass die klemmutter
einen quer zur Längsachse (4) verlaufenden ersten radialen Schlitz (5,13, 18) aufweist, so daß ein in axialer Richtung hintereinander liegender Stützkörper (2,11, 17) und ein Klemmkörper (3,12, 17) gebildet sind, wobei der Klemmkörper (3,12, 16) an wenigstens einer Umfangsstelle einen durchgehenden parallel zur Längsachse (4) verlaufenden zweiten axialen Schlitz (6,14, 19) aufweist, der über das Stellglied (9) in seiner Breite in Umfangsrichtung veränderbar ist.

2. Klemmmutter nach Anspruch 1, **dadurch gekennzeichnet, dass** der erste radiale Schlitz (5,13, 18) in Umfangsrichtung gesehen eine maximale Ausdehnung von 355 ° aufweist.

3. Klemmmutter nach Anspruch 1, **dadurch gekennzeichnet, dass** der Klemmkörper (12) zwei axiale Schlitze (14) aufweist, so daß ein getrennter Klemmbügel (12.1) gebildet ist, der über zwei Stellschrauben (9) mit einem mit dem Stützkörper (11) verbundenen Klemmkörperteil (12.2) verbindbar ist.

4. Klemmmutter nach Anspruch 1, **dadurch gekennzeichnet, dass** der Klemmkörper (17) zwei axiale Schlitze (19) aufweist, so dass ein Klemmkörperteil (17.1) und ein Klemmbügel (17.2) gebildet sind, die beide über je einen Steg (7) mit dem Stützkörper (16) verbunden sind.

5. Klemmmutter nach Anspruch 1, **dadurch gekennzeichnet, dass** die Mantelfläche des Stütz- (2,11, 16) und/oder Klemmkörpers (3,12, 17) mit Freistellungen (8) versehen sind.

## Claims

1. Clamping ring (1, 10, 15) which is secured against unintentional displacement for the axial positioning of a part which is arranged on a shaft and can be rotated about its longitudinal axis (4), the clamping ring (1, 10, 15) being pushed with its inner circumferential surface onto the circumferential surface of the shaft, and it being possible to clamp it elastically radially with a part of its inner circumferential surface against the circumferential surface of the shaft via an actuator (9), **characterized in that** the clamping ring (1, 10, 15) is configured as a clamping nut which has an internal thread which engages into an external thread of the shaft, the internal thread of the clamping body (3, 12, 17) differing from the external thread of the shaft, and **in that** the clamping nut has a first radial slot (5, 13, 18) which extends transversely with respect to the longitudinal axis (4), with the result that a clamping body (3, 12, 17) and a supporting body (2, 11, 17) lying one behind the other in the axial direction are formed, the clamping body (3, 12, 16) having a continuous second axial slot (6, 14, 19) at at least one circumferential location, which continuous second axial slot (6, 14, 19) extends parallel to the longitudinal axis (4) and the width of which in the circumferential direction can be changed via the actuator (9).

2. Clamping nut according to Claim 1, **characterized in that** the first radial slot (5, 13, 18) has a maximum extent of 355°, as seen in the circumferential direction.

3. Clamping nut according to Claim 1, **characterized in that** the clamping body (12) has two axial slots (14), with the result that a separate clamping clip (12.1) is formed which can be connected via two setting screws (9) to a clamping-body part (12.2) which is connected to the supporting body (11).

4. Clamping nut according to Claim 1, **characterized in that** the clamping body (17) has two axial slots (19), with the result that a clamping-body part (17.1) and a clamping clip (17.2) are formed which are both connected to the supporting body (16) via in each case one web (7).

5. Clamping nut according to Claim 1, **characterized in that** the circumferential surface of the supporting body (2, 11, 16) and/or clamping body (3, 12, 17) are provided with clearances (8).

## Revendications

1. Anneau de serrage (1, 10, 15) assuré contre un glissement imprévu pour le positionnement axial d'une pièce pouvant tourner autour de son axe longitudinal (4) et disposée sur un arbre, dans lequel l'anneau de serrage (1, 10, 15) est glissé avec sa surface latérale intérieure sur la surface latérale de l'arbre et peut être serré radialement de manière élastique par une partie de sa surface latérale intérieure contre la surface latérale de l'arbre au moyen d'un organe de réglage (9), **caractérisé en ce que** l'anneau de serrage (1, 10, 15) est formé par un écrou de serrage qui présente un filet intérieur qui s'engage sur un filet extérieur de l'arbre, dans lequel le filet intérieur du corps de serrage (3, 12, 17) se différencie du filet extérieur de l'arbre et **en ce que** l'écrou de serrage présente une première fente radiale (5, 13, 18) orientée transversalement à l'axe longitudinal (4), de telle manière qu'il se forme un corps de support (2, 11, 17) et un corps de serrage (3, 12 17) placés l'un derrière l'autre en direction axiale, le corps de serrage (3, 12, 16) présentant en au moins un endroit de la périphérie une deuxième fente axiale continue (6, 14, 19) orientée parallèlement à l'axe longitudinal (4), qui est réglable en largeur dans le sens périphérique au moyen de l'organe de réglage (9).

2. Ecrou de serrage selon la revendication 1, **caractérisé en ce que** la première fente radiale (5, 13, 18), considérée dans la direction périphérique, présente une extension maximale de 355°.

3. Ecrou de serrage selon la revendication 1, **caractérisé en ce que** le corps de serrage (12) présente deux fentes axiales (14), de façon à former un étrier de serrage séparé (12.1), qui peut être assemblé par deux vis de réglage (9) à une partie (12.2) du corps de serrage assemblée au corps de support (11).

4. Ecrou de serrage selon la revendication 1, **caractérisé en ce que** le corps de serrage (17) présente deux fentes axiales (19), de façon à former une partie de corps de serrage (17.1) et un étrier de serrage (17.2), qui sont tous les deux assemblés au corps de support (16) respectivement par une lamelle (7).

5. Ecrou de serrage selon la revendication 1, **caractérisé en ce que** la surface latérale du corps de support (2, 11, 16) et/ou du corps de serrage (3, 12, 17) est munie de retraits (8).
